Europäisches Patentamt

European Patent Office

Office européen des brevets

(19)

(11) Veröffentlichungsnummer: **0 186 063 B1**

(12) **EUROPÄISCHE PATENTSCHRIFT**

(45) Veröffentlichungstag der Patentschrift: 07.08.91

(51) Int. Cl.⁵: **A01F 29/02**

(21) Anmeldenummer: 85115871.7

(22) Anmeldetag: 12.12.85

Teilanmeldung 90114067.3 eingereicht am 12/12/85.

(54) **Messerradhäcksler.**

(30) Priorität: 22.12.84 DE 3447197

(43) Veröffentlichungstag der Anmeldung:
02.07.86 Patentblatt 86/27

(45) Bekanntmachung des Hinweises auf die
Patenterteilung:
07.08.91 Patentblatt 91/32

(84) Benannte Vertragsstaaten:
**AT CH FR GB LI NL**

(56) Entgegenhaltungen:
**DE-A- 2 909 000**
**DE-A- 3 141 347**
**DE-U- 1 680 526**
**DE-U- 1 788 684**
**FR-A- 1 544 166**

(73) Patentinhaber: **Alois Pöttinger Maschinenfabrik GmbH**

**A-4710 Grieskirchen(AT)**

(72) Erfinder: **Voraberger, Ulrich**
**Beethovenstrasse 4**
**A-4701 Bad Schallerbach(AT)**

(74) Vertreter: **Dupal, Helmut, Dipl-Ing.**
**Jägerweg 12**
**A-4702 Wallern(AT)**

## Beschreibung

Die Erfindung bezieht sich auf einen Messerradhäcksler nach dem Gattungsbegriff des Anspruches 1.

Bei Messerradhäckslern dieser Art sind die Messer an der, der axialen Einlaßöffnung des Häckslergehäuses zugewandten Vorderseite des Messerrades im wesentlichen in radialer Richtung verlaufend befestigt. Am Umfang des Messerrades sind Wurfflügel angebracht, welche das gehäckselte Erntegut entlang der Außenwand des Häckslergehäuses mitnehmen und durch die tangentiale Auslaßöffnung an der Außenwand des Häckslergehäuses in einen Auswurfkrümmer befördern und durch diesen auswerfen.

Bei einer allgemein üblichen Bauart solcher Messerradhäcksler, wie beispielsweise aus dem Prospekt Nr. II/III 16 1180 16/11 Pöttinger bekannt, ist jedes Messer auf einem Messerbock aufgeschraubt, der seinerseits auf einem als Scheibenrad ausgebildeten Messerrad befestigt ist. Am Umfang des Scheibenrades sind zwischen den Messern Wurfflügel befestigt, die gewöhnlich dort verschraubt sind, um die Zahl der Wurfflügel je nach erforderlicher Auswurfleistung verändern zu können.

Das gehäckselte Erntegut gleitet dabei die keilförmige Rinne, die von Messer, Messerbock und Messerradscheibe gebildet ist, entlang nach außen, wo es von den Wurfflügeln erfaßt und ausgeworfen wird. Durch den engen Strömungsquerschnitt und durch seine Form tritt starke Turbulenz im Erntegut auf, verbunden mit starker innerer Reibung, zusätzlich zu der erheblichen äußeren Reibung an den Begrenzungswänden der Rinne, wodurch bedeutende Energiemengen aufgebraucht werden.

Aus der DEOS 29 09 000 ist ein Messerradhäcksler nach dem Gattungsbegriff bekannt, bei dem die Messer in Abstand vor der Messerradscheibe an Bolzen befestigt sind, die ihrerseits mit der Messerradscheibe verschraubt sind. Der zwischen Messern und Messerradscheibe gebildete Durchtrittsspalt gestattet dem gehäckselten Erntegut ohne wesentlichen Widerstand hindurchzutreten, worauf es in den Bereich zwischen Messerradscheibe und radialer Gehäusewand gelangt und dort von an der Messerradscheibe befestigten Wurfflügeln erfaßt und ausgeworfen wird. Das gehäckselte Erntegut findet bei diesem Messerradhäcksler im Vergleich zur vorgenannten Anordnung weniger Behinderung beim Abströmen vor, so daß sich die auftretende Reibung verringert, doch verbleibt wegen der vielen konstruktiv begründeten Hindernisse ein erheblicher Strömungswiderstand, der zu Turbulenz und erhöhter Reibung Anlaß gibt und damit den Energiebedarf erhöht.

Bei den vorerwähnten Häckslern erfolgt die Energieübertragung auf das Erntegut, sowohl für die Zerkleinerungsarbeit als auch für die Abführung desselben aus der Maschine durch Einleitung der Antriebkräfte in das Erntegut über das Häckselrad, das deshalb eine dementsprechend hohe Festigkeit und Steifigkeit aufweisen muß.

Bei den meisten Häckslern für die Bearbeitung von Silomais ist überdies noch eine Nachzerkleinerungsvorrichtung vorgesehen, von der ein Teil auf dem Messerrad befestigt ist und gewöhnlich aus Schlagkanten oder Schlagleisten oder dgl. besteht, während dessen anderer Teil an der äußeren Gehäusewand innen fest angebracht ist und aus einem Reibboden wiederum mit Schlagkanten oder Schlagleisten, besteht. Diese Nachzerkleinerungsvorrichtungen benötigen sehr bedeutende Energiemengen, die gleichfalls über das Messerrad zugeführt werden müssen, wobei die einzuleitenden Kräfte ebenfalls ungleichförmig auftreten und zu den ungleichförmigen Schnittkräften hinzutreten.

Soll die Durchsatzleistung an Erntegut bei diesen Maschinen gesteigert werden, so muß entweder der Durchmesser des Messerrades oder dessen Drehzahl erheblich vergrößert werden, was in jedem Fall zu schweren, aufwendigen Konstruktionen mit steigender Präzision führt, wobei sehr schnell die Grenzen des wirtschaftlich Sinnvollen überschritten sind.

Sollen Maschinen dieser Art einfacher und leichter gebaut werden, so sind dem eben solcherart enge Grenzen gezogen. Neben den schon erwähnten sehr hohen, stoßweisen Belastungen des Messerrades durch die Schnittkräfte der Messer treten noch die über den Messerradumfang und die Wurfvorrichtung übertragenen Beschleunigungskräfte von der Auswurfvorrichtung her auf, welche das Messerrad im Umfangbereich einer bedeutenden Wechselbelastung aussetzen, die durch die, bei den meist noch Verwendung findenden Nachzerkleinerungsvorrichtungen auftretenden, am Messerradumfang eingeleiteten zusätzlichen Kräfte verstärkt werden.

Aus dem DE-P 691.505 ist eine Maschine zum Häckseln und Musen von Pflanzenteilen bekannt geworden, bei der ein scheibenförmiges, in der Oberfläche geschlossenes Messerrad mit vorderseitig angeordneten, etwa radialen Messern, die das Gut an einer Gegenschneide abschneiden, gemeinsam mit einem dahinter, auf der gleichen Nabe angeordneten Wurfrad wesentlich größeren Durchmessers, das am Umfang mit Wurfflügeln, in der Art von Hämmern, welche in dem Raum zwischen Wurfrad, Außenwand und den beiden Stirnwänden des Häckslergehäuses umlaufen, versehen ist, die mit einem Sieb in der Austrittsöffnung des Gutes zusammenarbeiten, in gleicher Drehrichtung angetrieben umläuft. Das Messerrad weist bei dieser Maschine einen geringeren Durchmesser auf, so daß das Gut über dessen Außenrand auf das Wurfrad überführt wird. Dabei wird das Gut zusätzlich in axialer Richtung versetzt und durch einen engen Spalt zwischen dem Gehäuse und dem Wurfrad zum Musen des Erntegutes geführt.

Bei Gebläsehäckslern, wie etwa in der FR 1 544 166 beschrieben, läuft ein Gebläserad auf einer Messerwelle angetrieben um, wobei sternförmig angeordnete Messer auf einer hohlen Gebläseradwelle sitzen und gleichsinnig mit dieser umlaufen, während auf einer zweiten, in der Gebläsewelle gelagerten Welle gegensinnig umlaufende Gegenschneiden für die Häckselmesser angebracht sind. Beide Messersätze sind frei ausragend auf ihren Antriebswellen befestigt.

Das DE-GM 1 680 526 zeigt einen Gebläsehäcksler zum Dreschen von Getreide, bei dem das Gebläserad auf der Welle des davor angeordneten Dreschrades antreibbar gelagert ist. Beide Räder laufen in gleicher Richtung angetrieben um, wobei sie die gleiche Umfangsgeschwindigkeit aufweisen, d.h. wegen des größeren Durchmessers des Gebläserades läuft dieses mit einer geringeren Drehzahl um. Diese liegt etwa bei der halben Umfangsgeschwindigkeit für Maishäcksler.

Aufgabe der Erfindung ist es, die Belastung des Messerrades bei einem Messerradhäcksler durch Verringerung der übertragenen Energie ohne Schmälerung der Zerkleinerungsleistung zu vermindern und gleichzeitig die Durchsatzleistung des Wurfrades beizubehalten.

Diese Aufgabe wird bei einem Messerradhäcksler nach dem Gattungsbegriff des Anspruches 1 durch die Merkmale des kennzeichnenden Teiles des Anspruches 1 gelöst.

Es wird dadurch erreicht, daß gleichzeitig mit der Entlastung des Messerrades von einem sehr erheblichen Teil der Belastungen , besonders an seinem Umfangbereich durch die Verringerung der aufgewendeten Wurfenergie und die Verluste an Energie durch Reibung und Turbulenz des Erntegutes wesentlich herabgesetzt werden, wodurch die Anpassung des Messerrades an das Schneiden des Erntegutes und die Anpassung des Wurfrades an das Fördern des Erntegutes besser möglich ist und eine höhere Durchsatzleistung bei einer vorgegebenen Anordnung oder ein geringer Energieverbrauch bei gleicher Durchsatzleistung erzielbar ist, wobei die Gestaltung des Durchtrittsspaltes für das Häckselgut am Messerrad und die Anordnung der Gebläseflügel der Auswurfvorrichtung am Wurfrad und deren gegenseitige Zuordnung sehr wesentlich zum guten Ergebnis dieser Maßnahmen insgesamt beitragen. Dadurch sind die nachweislich bedeutenden Steigerungen der Durchsatzleistung bei Häckslern dieser Ausführung möglich, oder solche Häcksler können bei gleicher Durchsatzleistung mit geringerer Antriebsleistung, d.h. mit Schleppern geringerer Leistung betrieben werden.

Die Unteransprüche, auf die hier ausdrücklich verwiesen wird, betreffen besonders vorteilhafte Ausgestaltungen der Erfindung, deren Merkmale die Anpassung des Messerrades und des Wurfrades an gesteigerte Anforderungen in besonders günstiger Weise gestatten.

Durch die Anwendung von Merkmalen der Unteransprüche auf die Gestaltung der Auswurfvorrichtung und auf häufig vorgesehene Nachzerkleinerungsvorrichtungen ist eine weitere Herabsetzung des spezifischen Energieverbrauches möglich. Es kann durch die Anordnung und Gestaltung der Wurfflügel der Anteil des Energieverbrauches, für die Erzeugung eines Luftstromes, auf die unbedingt erforderliche Höhe abgesenkt werden und die Belastung des Wurfrades durch getrennte Anordnung von Auswurf-und Nachzerkleinerungsvorrichtung besser auf dessen Umfang verteilt werden.

Eine weitere Serie von Unteransprüchen betrifft besonders einfache und mechanisch stabile Anordnungen und Lagerungen des Messerrades und des Wurfrades, sowie die Anordnung der Antriebsvorrichtung und des Zuführungsgetriebes für die vorgeschalteten Hilfsvorrichtungen.

Die Erfindung wird im folgenden an Hand eines in der Zeichnung dargestellten Beispiels beschrieben.

In der Zeichnung zeigen:

Fig. 1    eine schematische Seitenansicht eines Feldhäckslers,

Fig. 2    einen Schnitt durch einen Messerradhäcksler senkrecht zur Drehachse des Messerrades und

Fig. 3    einen Axialschnitt durch einen Messerradhäcksler mit Durchtrittsspalt zwischen Messerrad und Messer

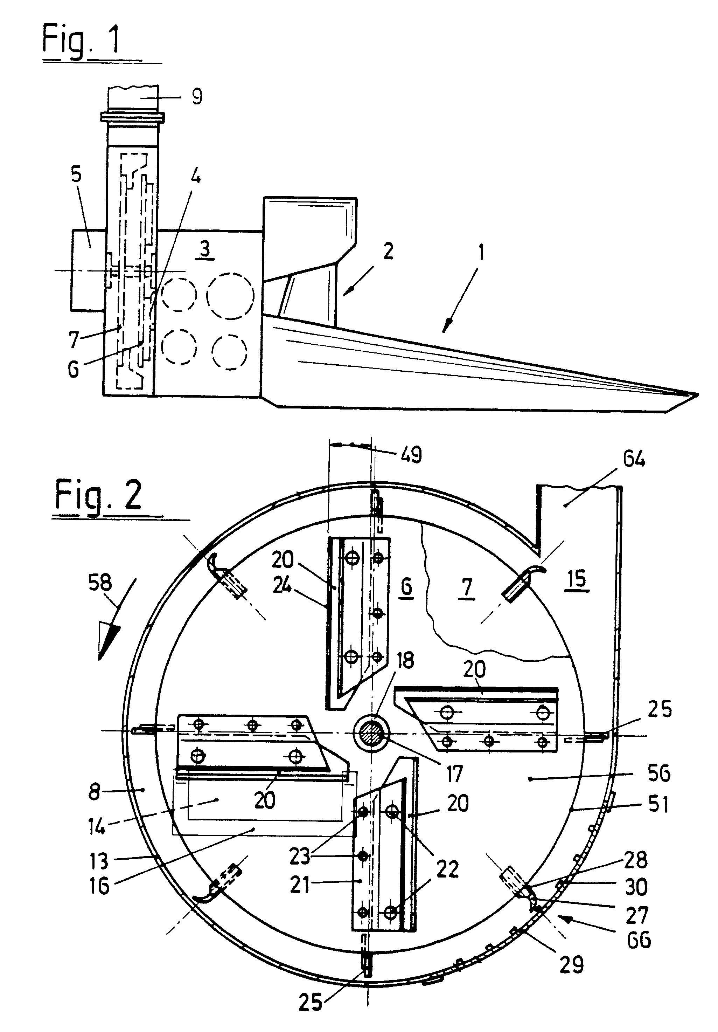

In Fig. 1 ist ein Feldhäcksler dargestellt, mit einer Aufnahmevorrichtung 1, einer sich daran anschließenden Abtrenn- und Einzugsvorrichtung 2 und einer Preßvorrichtung 3, die einer Häckselvorrichtung 4 mit Antriebsvorrichtung 5 vorgeschaltet sind. Die Preßwalzen der Preßvorrichtung 3 und das Häckselwerk der Häckselvorrichtung 4 sind angedeutet. Der Häckselvorrichtung 4 ist ein Auswurfkrümmer 9 nachgeordnet.

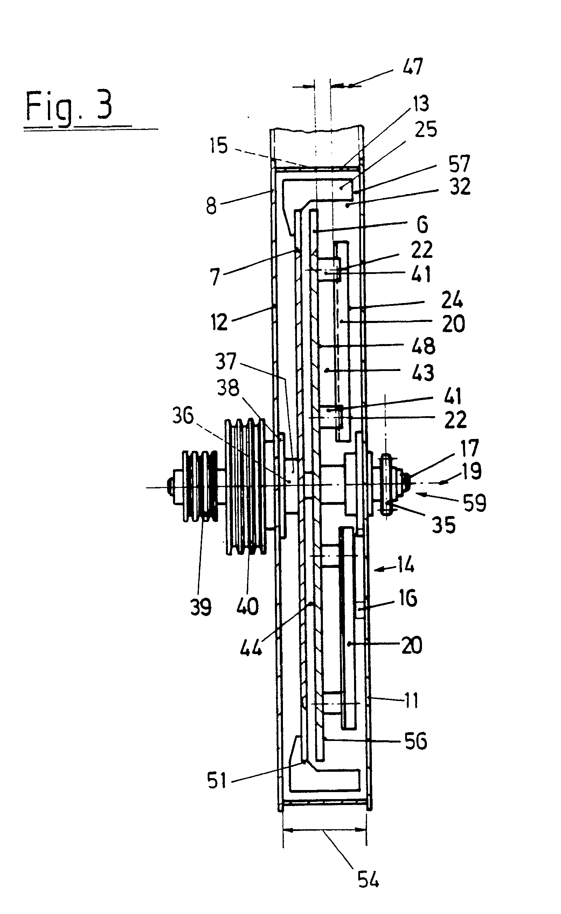

Die Häckselvorrichtung 4 besteht aus einem mit Messern 20 ausgestatteten Messerrad 6, das mit einer Messerradnabe 18 auf einer Messerradwelle 17 befestigt ist und in einem Häckslergehäuse 8 angetrieben umläuft, dessen Außenwand 13 mit einer Auslaßöffnung 15 versehen ist, die in einen Auslaßstutzen 64 führt, an den ein Auswurfkrümmer 9 angeflanscht ist (Fig. 2 ).

Vor dem Messerrad 6 ist die vordere Stirnwand 11 des Häckslergehäuses 8 angeordnet, die mit einer Einlaßöffnung 14 versehen ist, in der eine Gegenschneide 16, fest angebracht ist, mit der die Schneiden 24 der Messer 20 zusammenarbeiten.

Hinter dem Messerrad 6 ist auf einer als Hohlwelle ausgebildeten Wurfradwelle 37 ein Wurfrad 7 befestigt, das die gleiche Drehachse 19 wie das Messerrad 6 besitzt. Die Messerradwelle 17 ist in der vorderen Stirnwand 11 des Häckslergehäuses 8 mit dem vorderen Messerradwellenlager 33 gelagert und mit der Verlängerung 59 über dieses hinausgeführt, an der das Abtriebsrad 35 für ein Zuführungsgetriebe für die vorgeschalteten Vorrichtungen 1,2,3 des Häckslers angebracht ist.

Mit dem anderen Ende ist die Messerradwelle 17 mit dem hinteren Messerradwellenlager 36 in der hohlen Wurfradwelle 37 gelagert, die ihrerseits mit dem Wurfradwellenlager 38 in der hinteren Stirnwand 12 des Häckslergehäuses 8 gelagert ist. Wurfradwelle 37 und Messerradwelle 17 sind über das Wurfradwellenlager 38 hinaus verlängert und tragen ein Antriebsrad 40 und ein Antriebsrad 39 für den getrennten Antrieb der beiden Wellen über die Antriebsvorrichtung 5. (Fig.3 ).

Bei der in Fig.2 und 3 dargestellten Anordnung besteht das Messerrad 6 aus einer vollen Scheibe, auf der die Messer 20 mit den Abstandhaltern 41 der Messerverschraubung 22 in einem Abstand 47 zwischen Schneide 24 und der Oberfläche 48 der Vorderseite 56 des Messerrades 6 gehalten sind. Zwischen den Messern 20 und der Oberfläche 48 des Messerrades 6 ist ein Durchtrittsspalt 43 für das Erntegut gebildet.

Das Wurfrad 7 besteht aus einer Scheibe und trägt an seinem Umfang 51 Wurfflügelträger 26 an denen Wurfflügel 25 einer Auswurfvorrichtung 10 sich radial erstreckend befestigt sind, die in dem Raum 32 zwischen dem Umfang 31 des Messerrades 6, sowie dem Umfang 51 des Wurfrades 7 und der Außenwand 13 des Häckslergehäuses 8 umlaufen.

Die Wurfflügel 25 weisen eine radiale Höhe auf, mit der sie in radialer Richtung den äußeren Teil 57 des Raumes 32 zwischen Messerrad 6 und Außenwand 13 überdecken, so daß die Luftförderung sehr stark herabgesetzt ist und sind über die Breite 54 der Außenwand 13 des Häckslergehäuses 8 im Bereich des Förderspaltes 3, diesen beidseitig überragend, angeordnet.

Zwischen den Wurfflügeln 25 sind Reibteile 27 einer Nachzerkleinerungsvorrichtung 66 mit Reibteilträgern 28 über den Umfang 51 des Wurfrades 7 verteilt angebracht, die mit den Reibkanten 30 einer, in der Außenwand 13 des Häckslergehäuses 8 im Bereich zwischen Einlaßöffnung 14 und Auslaßöffnung 15 eingesetzten Reibplatte 29 zusammenarbeiten und das Erntegut nachträglich nochmals zerkleinern und dadurch aufschließen (Fig. 2).

Zwischen Messerrad 6 und Wurfrad 7 ist in diesem Fall nur ein Mindestabstand 44 vorgesehen, der sich aus konstruktiven Erwägungen ergibt.

Das Messerrad 6 läuft mit doppelter bis dreifacher Drehzahl in der gleichen Drehrichtung 58 wie das Wurfrad 7 um.

Das gehäckselte Erntegut strömt an der Vorderseite 56 des Messerrades 6 durch die, von den Messern 20 und der Oberfläche 48 des Messerrades 6 gebildeten Durchtrittsspalten 43 nach außen ab und wird an der Außenwand 13 von den überdeckenden Wurfflügeln 25 des Wurfrades 7 erfaßt und wie vorher beschrieben weiterbefördert.

Legende :
-

1 Aufnahmevorrichtung
2 Abtrenn-und Einzugsvorrichtung
3 Preßvorrichtung
4 Häckselvorrichtung
5 Antriebsvorrichtung
6 Messerrad
7 Wurfrad
8 Häckslergehäuse
9 Auswurfkrümmer
10 Auswurfvorrichtung
11 vordere Stirnwand des Häckslergehäuses
12 hintere Stirnwand des Häckslergehäuses
13 Außenwand des Häckslergehäuses
14 Einlaßöffnung in der vorderen Stirnwand 11
15 Auslaßöffnung der Außenwand 13
16 Gegenschneide
17 Messerradwelle
18 Messerradnabe
19 Drehachse des Messerrades 6 und des Wurfrades 7
20 Messer
21
22 Messerverschraubung
23 Messerhalterverschraubung
24 Schneide des Messers 20
25 Wurfflügel der Auswurfvorrichtung 10
26 Wurfflügelträger
27 Reibteil
28 Reibteilträger
29 Reibplatte
30 Reibkante
31 Umfang des Messerrades 6
32 Raum zwischen Messerrad 6, dem Wurfrad 7 und der Außenwand 13
33 vorderes Messerradwellenlager
34
35 Abtriebsrad für Zuführungsgetriebe
36 hinteres Messerradwellenlager
37 Wurfradwelle
38 Wurfradwellenlager
39 Antriebsrad der Messerradwelle 17
40 Antriebsrad der Wurfradwelle
41 Abstandhalter der Messerverschraubung
42
43 Durchtrittsspalt zwischen Messer 20 und Messerrad 6

44 Mindestabstand zwischen Messerrad 6 und Wurfrad 7

45

46

47 Abstand zwischen Schneide 24 und Oberfläche 48 des Messerrades 6

48 Oberfläche des Messerrades 6

49

50

51 Umfang des Wurfrades 7

52

53

54 Breite der Außenwand 13

55

56 Vorderseite des Messerrades 6

57 äußerer Teil des Raumes 32

58 Drehrichtung des Messerrades 6

59 Verlängerung der Messerradwelle 17

60

61

62

63

64 Auslaßstutzen des Häckslergehäuses 8

65

66 Nachzerkleinerungsvorrichtung

## Patentansprüche

1. Messerradhäcksler mit einem Häckslergehäuse (8) mit einer Einlaßöffnung (14) in seiner vorderen Stirnwand (11) und einer Auslaßöffnung (15) in seiner Außenwand (13), in dem ein Messerrad (6) und ein Wurfrad (7) gemeinsam auf einer Antriebswelle befestigt sind und mit dieser angetrieben umlaufen, wobei die an der Vorderseite (56) des Messerrades (6) fest angebrachten Messer (20) mit einer an der Einlaßöffnung (14) fest angebrachten Gegenschneide (16) in einer senkrecht zur Antriebswelle liegenden Ebene zusammenarbeiten und das Wurfrad (7) an seinem Umfang (51) mit Wurfflügeln (25) versehen ist, die in dem Raum (32) zwischen Messerrad (6), Außenwand (13) und wenigstens einer der beiden Stirnwände (11 und/oder 12) des Häckslergehäuses (8) umlaufen, dadurch gekennzeichnet, daß das Messerrad (6) auf einer Messerradwelle (17) und das Wurfrad (7) auf einer Wurfradwelle (37), die auf der Messerradwelle (17) gelagert ist und von getrennten Antriebsorganen gleichsinnig, mit unterschiedlichen Drehzahlen angetrieben werden, wobei die Drehzahl des Wurfrades (7) geringer ist als jene des Messerrades (6) und die Messer (20) in einem Abstand (47) zu der Oberfläche (48) des Messerrades (6) angeordnet sind, der den Durchtritt des Häckselgutes zwischen den radial ausgerichteten Schneiden (24) der Messer (20) und der Oberfläche (48) des Messerrades (6) ohne Behinderung ermöglicht und die Wurfflügel (25) des Wurfrades (7), das Messerrad (6) und dessen Messer (20) und den Durchtrittsspalt (43) für das Häckselgut nach außen zu beiderseits überdecken.

2. Messerradhäcksler nach dem vorhergehenden Anspruch, dadurch gekennzeichnet, daß das Messerrad (6) mit einer mehrfachen, vorzugsweise mit der doppelten Drehzahl angetrieben wird als das Wurfrad (7).

3. Messerradhäcksler nach Anspruch 1, dadurch gekennzeichnet, daß die Oberfläche (48) des Messerrades (6) an der Vorderseite (56) von den Schneiden (24) der Messer (20) um einen Abstand überragt wird, bei dem der Durchtrittsspalt (43) das Mehrfache der maximalen Schnittlänge des Häckselgutes erreicht und vorzugsweise das Doppelte der maximalen Schnittlänge des Erntegutes beträgt.

4. Messerradhäcksler nach einem der Ansprüche 1 bis 3, dadurch gekennzeichnet, daß die Messer (20) mit Abstandshaltern (41) in Abstand parallel zu der Oberfläche (48) des Messerrades (6) gehalten sind.

5. Messerradhäcksler nach Anspruch 1, dadurch gekennzeichnet, daß die Wurfflügel (25) Teil einer Auswurfvorrichtung (19) sind, die aus am Umfang des Wurfrades (7) angebrachten Wurfflügelträgern (26) und aus an diesen angebrachten Wurfflügeln (25) besteht, die etwa radial ausgerichtet, den Raum (32) außerhalb des Messerades (6) und des Wurfrades (7) bis zur Außenwand (13) des Häckslergehäueses (8) im wesentlichen über deren gesamte Breite (54) und wenigstens den unmittelbar von der Außenwand (13) nach innen anschließenden Teil (57) überdecken.

6. Messerradhäcksler nach einem der Ansprüche 1 oder 5, dadurch gekennzeichnet, daß an dem Wurfrad (7) an seinem Umfang (51) zwischen den Wurfflügeln (25) Reibteilträger (28) befestigt sind, an denen Reibteile (27) fest angebracht sind, die mit Reibkanten (30) von wenigstens einer Reibplatte (29) an der Außenwand (13) des Häckslergehäuses (8) im Bereich zwischen Einlaßöffnung (14) und Auslaßöffnung (15) angeordnet, zusammenarbeiten.

7. Messerradhäcksler nach einem der Ansprüche 1, 5 oder 6, dadurch gekennzeichnet, daß die Wurfradwelle (37) mit einem Wurfradwellenlager (38) an der hinteren Stirnwand (12) des Häckslergehäuses (8) gelagert ist.

8. Messerradhäcksler nach einem der Ansprüche 1 oder 5 bis 7, dadurch gekennzeichnet, daß die Wurfradwelle (37) mit dem hinteren Messerradwellenlager (36) auf der Messerradwelle (17) gelagert ist.

9. Messerradhäcksler nach einem der Ansprüche 1 oder 5 bis 8, dadurch gekennzeichnet, daß die Messerradwelle (17) mit dem vorderen Messerradwellenlager (33) in der vorderen-Stirnwand (11) des Häckslergehäuses (8) gelagert ist, auf deren Verlängerung (59) ein Abtriebsrad (35) eines Zuführungsgetriebes, zumindest für den Antrieb entweder einer Aufnahmevorrichtung (1) oder einer Abtrenn-und Einzugsvorrichtung (2) oder einer Preßvorrichtung (3) befestigt ist.

10. Messerradhäcksler nach einem der Ansprüche 1 oder 5 bis 9, dadurch gekennzeichnet, daß die Wurfradwelle (37) und die Messerradwelle (17) an der hinteren Stirnwand (12) des Häckslergehäuses (8) über das Wurfradwellenlager (38) hinausgeführt und mit zugeordneten Antriebsrädern (39,40) der Antriebsvorrichtung (5) versehen sind.

## Claims

1. A blade disc chopper comprising a chopper housing (8) with an inlet opening (14) in its front end wall (11) and an outlet opening (15) in its outer wall (13), in which a blade disc (6) and a scoop wheel (7) are secured together on a drive shaft and rotate driven by said shaft, the blades (20) securely attached to the front side (56) of the blade disc (6) cooperating with a counter blade (16) securely attached to the inlet opening (14) in a plane lying perpendicular to the drive shaft and the scoop wheel (7) being provided on its circumference (51) with scoop blades (25), which rotate in the space (32) between the blade disc (6), outer wall (13) and at least one of the two end walls (11 and/or 12) of the chopper housing (8), characterised in that the blade disc (6) is driven on a blade disc shaft (17) and the scoop wheel (7) on a scoop wheel shaft (37), which is mounted on the blade disc shaft (17), in the same direction at different rotational speeds by separate drive elements, the rotational speed of the scoop wheel (7) being slower than that of the blade disc (6) and the blades (20) being arranged at a distance (47) from the surface (48) of the blade disc (6), which allows the material to be chopped to pass between the radially arranged cutting edges (24) of the blades (20) and the surface (48) of the blade disc (6) without hindrance and the scoop blades (25) of the scoop wheel (7), cover the blade disc (6) and its blades (20) and the through gap (43) for the material to be chopped towards the outside on both sides.

2. A blade disc chopper according to the preceding claim, characterised in that the blade disc (6) is driven at a rotational speed which is a multiple of, preferably twice, the rotational speed of the scoop wheel (7).

3. A blade disc chopper according to claim 1, characterised in that, on the front side (56), the cutting edges (24) of the blades (20) project above the surface (48) of the blade disc (6) at a distance, in which the through gap (43) is a multiple of the maximum cutting length of the material to be chopped and is preferably twice the maximum cutting length of the crop.

4. A blade disc chopper according to one of claims 1 to 3, characterised in that the blades (20) are held by means of spacing elements (41) at a distance from and parallel to the surface (48) of the blade disc (6).

5. A blade disc chopper according to claim 1, characterised in that the scoop blades (25) are part of an ejecting device (19), which is formed by scoop blade supports (26) arranged on the circumference of the scoop wheel (7) and scoop blades (25), which are arranged on said supports and which, arranged approximately radially, cover the space (32) outside the blade disc (6) and the scoop wheel (7) as far as the outer wall (13) of the chopper housing (8) essentially over the entire width (54) of said outer wall (13) and at least the section (57) immediately adjoining the outer wall (13) on the inside.

6. A blade disc chopper according to one of claims 1 or 5, characterised in that friction element supports (28) are secured to the circumference (51) of the scoop wheel (7) between the scoop blades (25), to which friction element supports (28) friction elements (27) are securely attached, which cooperate with friction edges (30) of at least one friction plate (29) on the outer wall (13) of the chopper housing (8) in the region between the inlet opening (14) and the outlet opening (15).

7. A blade disc chopper according to one of claims 1, 5 or 6, characterised in that the scoop wheel shaft (37) is mounted with a scoop wheel shaft bearing (38) on the rear end wall (12) of the chopper housing (8).

8. A blade disc chopper according to one of claims 1 or 5 to 7, characterised in that the scoop wheel shaft (37) is mounted with the rear blade disc shaft bearing (36) on the blade disc shaft (17).

9. A blade disc chopper according to one of claims 1 or 5 to 8, characterised in that the blade disc shaft (17) is mounted with the front blade disc shaft bearing (33) in the front end wall (11) of the chopper housing (8), a drive wheel (35) of a feed gearing, at least for driving either a receiving device (1) or a separating and drawing-in device (2) or a compressing device (3), being secured to the extension (59) of said blade disc shaft (17).

10. A blade disc chopper according to one of claims 1 or 5 to 9, characterised in that the scoop wheel shaft (37) and the blade disc shaft (17) are extended beyond the scoop wheel shaft bearing (38) at the rear end wall (12) of the chopper housing (8) and are provided with associated drive wheels (39, 40) of the drive device (5).

**Revendications**

1. Hacheur à roue porte-lames, comportant un carter (8) percé d'un orifice d'admission (14) dans sa paroi extrême antérieure (11) et d'un orifice de sortie (15) dans sa paroi externe (13), dans lequel une roue (6) porte-lames et une roue projeteuse (7) sont fixées conjointement sur un arbre d'entraînement et sont entraînées en rotation avec ce dernier, les lames (20), installées rigidement sur le côté antérieur (56) de la roue (6) porte-lames, coopérant, dans un plan perpendiculaire à l'arbre d'entraînement, avec une contre-lame (16) installée rigidement sur l'orifice d'admission (14), et la roue projeteuse (7) étant pourvue, sur son pourtour (51), de pales projeteuses (25) qui tournent dans l'espace (32) situé entre la roue (6) porte-lames, la paroi externe (13) et au moins l'une des deux parois extrêmes (11 et/ou 12) du carter (8) du hacheur, caractérisé par le fait que la roue (6) porte-lames est montée sur un arbre (17) et la roue projeteuse (7) est montée sur un arbre (37) qui est monté sur l'arbre (17) de la roue porte-lames, lesdites roues étant entraînées dans le même sens, par des organes d'entraînement distincts, avec des vitesses angulaires différentes, la vitesse angulaire de la roue projeteuse (7) étant plus faible que celle de la roue (6) porte-lames, et les lames (20) étant situées, par rapport à la face supérieure (48) de la roue (6) porte-lames, à un intervalle (47) autorisant, sans aucune gêne, le passage du produit haché entre les tranchants (24) des lames (20), orientés radialement, et la face supérieure (48) de la roue (6) porte-lames, et les pales projeteuses (25) de la roue projeteuse (7) recouvrant de part et d'autre, vers l'extérieur, la roue (6) porte-lames et les lames (20) de cette dernière, ainsi que l'interstice (43) de passage du produit haché.

2. Hacheur à roue porte-lames, selon la revendication précédente, caractérisé par le fait que la roue (6) porte-lames est entraînée à une vitesse angulaire représentant un multiple, de préférence le double de celle de la roue projeteuse (7).

3. Hacheur à roue porte-lames, selon la revendication 1, caractérisé par le fait que la face supérieure (48) de la roue (6) porte-lames est dépassée par les tranchants (24) des lames (20), sur le côté antérieur (56), d'une distance en présence de laquelle l'interstice de passage (43) atteint plusieurs fois la longueur de coupe maximale du produit haché, et représente de préférence le double de la longueur de coupe maximale du produit récolté.

4. Hacheur à roue porte-lames, selon l'une des revendications 1 à 3, caractérisé par le fait que les lames (20) sont retenues, par des organes d'espacement (41), parallèlement à distance de la face supérieure (48) de la roue (6) porte-lames.

5. Hacheur à roue porte-lames, selon la revendication 1, caractérisé par le fait que les pales projeteuses (25) font partie d'un dispositif d'éjection (19) se composant de supports (26) installés sur le pourtour de la roue projeteuse (7), ainsi que de pales projeteuses (25) qui sont implantées sur lesdits supports et qui, dirigées sensiblement dans le sens radial, recouvrent l'espace (32) situé à l'extérieur de la roue (6) porte-lames et de la roue projeteuse (7), jusqu'à la paroi externe (13) du carter (8) du hacheur, pour l'essentiel sur toute la largeur (54) de ladite paroi, ainsi qu'au moins la zone (57) directement attenante à la paroi externe (13), vers l'intérieur.

6. Hacheur à roue porte-lames, selon l'une des revendications 1 ou 5, caractérisé par le fait que des supports (28) sont fixés à la roue projeteuse (7) sur son pourtour (51), entre les pales projeteuses (25), supports auxquels sont assujetties des pièces de frottement (27) qui coopèrent avec des arêtes de frottement (30) d'au moins une plaque de frottement (29) disposée, sur la paroi externe (13) du carter (8) du hacheur, dans la région située entre l'orifice d'admission (14) et l'orifice de sortie (15).

7. Hacheur à roue porte-lames, sel on l'une des revendications 1, 5 ou 6, caractérisé par le fait que l'arbre (37) de la roue projeteuse est monté, par un palier (38), dans la paroi extrême postérieure (12) du carter (8) du hacheur.

8. Hacheur à roue porte-lames, selon l'une des revendications 1 ou 5 à 7, caractérisé par le fait que l'arbre (37) de la roue projeteuse est monté, à l'aide du palier postérieur (36), sur l'arbre (17) de la roue porte-lames.

9. Hacheur à roue porte-lames, selon l'une des revendications 1 ou 5 à 8, caractérisé par le fait que l'arbre (17) de la roue porte-lames est monté, à l'aide du palier antérieur (33), dans la paroi extrême antérieure (11) du carter (8) du hacheur, arbre sur le prolongement (59) duquel une roue menée (35) d'une transmission d'arrivée est fixée en vue d'assurer au moins l'entraînement d'un dispositif de réception (1) ou d'un dispositif (2) de séparation et d'enfournement, ou bien d'un dispositif de compression (3).

10. Hacheur à roue porte-lames, selon l'une des revendications 1 ou 5 à 9, caractérisé par le fait que l'arbre (37) de la roue projeteuse et l'arbre (17) de la roue porte-lames font saillie au-delà du palier (38) de l'arbre de la roue projeteuse, sur la paroi extrême postérieure (12) du carter (8) du hacheur, et sont munis de roues menantes associées (39, 40) du dispositif d'entraînement (5).

Fig. 1

Fig. 2

Fig. 3